# EUROPÄISCHE PATENTSCHRIFT

(11) **EP 3 900 147 B1**
(45) Veröffentlichungstag und Bekanntmachung des Hinweises auf die Patenterteilung: **12.10.2022**
(21) Anmeldenummer: 19804686.4
(22) Anmeldetag: 12.11.2019
(51) Int. Cl.: H02J 7/00

(54) **BATTERIEMODUL FÜR EIN KRAFTFAHRZEUG**
BATTERY MODULE FOR A MOTOR VEHICLE
MODULE DE BATTERIE POUR VÉHICULE AUTOMOBILE

(30) Priorität: 17.12.2018 DE 102018221856
(43) Veröffentlichungstag der Anmeldung: 27.10.2021
(73) Patentinhaber: Robert Bosch GmbH, 70442 Stuttgart (DE)
(72) Erfinder: GROSCHKE, Ronny, 67112 Mutterstadt (DE)
(86) Internationale Anmeldenummer: PCT/EP2019/080971
(87) Internationale Veröffentlichungsnummer: WO 2020/126226

(56) Entgegenhaltungen:
- US-A1- 2005 093 512
- US-A1- 2005 212 484

## Beschreibung

Die Erfindung betrifft ein Batteriemodul für ein Kraftfahrzeug, welches mindestens eine Batteriezelle, einen negativen Pol, einen positiven Pol, einen Ladetransistor, der für einen Entladestrom leitend ist, einen Entladetransistor, der für einen Ladestrom leitend ist, und ein Managementsystem zum Steuern und Überwachen der mindestens einen Batteriezelle und der Transistoren umfasst.

Dabei sind die Transistoren elektrisch seriell zu der mindestens einen Batteriezelle geschaltet, und ein Knotenpunkt zwischen den Transistoren ist mit einem Versorgungseingang des Managementsystems elektrisch verbunden.

### Stand der Technik

Konventionelle Kraftfahrzeuge weisen einen Antrieb auf, welcher üblicherweise einen Verbrennungsmotor umfasst. Ferner umfassen konventionelle Kraftfahrzeuge einen elektrischen Energiespeicher zur Versorgung eines Anlassers und weiterer Verbraucher des Kraftfahrzeugs sowie einen Generator zum Laden des elektrischen Energiespeichers. Der Energiespeicher ist beispielsweise eine Blei-Säure-Batterie und weist eine Nennspannung von 12 V oder 24 V auf.

Bei Ausfall einer Blei-Säure-Batterie in einem Kraftfahrzeug kann es vorteilhaft sein, diese durch eine Lithium-Ionen-Batterie zu ersetzen. Lithium- lonen-Batteriezellen zeichnen sich unter anderem durch hohe Energiedichten, thermische Stabilität und eine äußerst geringe Selbstentladung aus. Ein gattungsgemäßes Batteriemodul, das für den Ersatz einer Blei-Säure-Batterie in einem Kraftfahrzeug geeignet ist, umfasst mindestens eine Batteriezelle und eine Schalteinheit, mittels der das Batteriemodul zugeschaltet sowie abgeschaltet werden kann. Ferner ist ein Managementsystem zum Steuern und Überwachen der mindestens einen Batteriezelle und der Schalteinheit vorgesehen.

Das Dokument DE 10 2011 089 352 A1 offenbart eine Batterie mit mehreren Batteriezellen und einem Batteriemanagementsystem. Ferner sind zwei Transistoren vorgesehen, mittels welchen die Batteriezellen auf Pole einer Batterie zuschaltbar sind, und die beispielsweise als Feldeffekttransistoren ausgeführt sind. Die Transistoren sind seriell verschaltet. Ein Knotenpunkt zwischen den Transistoren ist mit einem Spannungsversorgungseingang des Batteriemanagementsystems verbunden.

Das Dokument DE 10 2014 210 648 A1 offenbart ein Batteriesystem mit mehreren seriell verschalteten Batteriezellen und zwei in Reihe geschalteten Feldeffekttransistoren. Die Feldeffekttransistoren sind beispielsweise als MOSFET ausgestaltet. Das Batteriesystem ist insbesondere in einem Elektrofahrzeug einsetzbar. Durch Messen einer Spannung, welche über einem der Feldeffekttransistoren abfällt, kann auf einen Fehler, insbesondere einen Kurzschluss, des Feldeffekttransistors geschlossen werden.

Das Dokument DE 10 2016 212 557 A1 offenbart ein Batteriesystem mit mehreren Batteriemodulen, wobei jedes Batteriemodul mehrere seriell verschaltete Batteriezellen und eine Steuereinheit aufweist. Ferner umfasst jedes Batteriemodul zwei seriell verschaltete Halbleiterschalter. Bei den Haltleiterschaltern handelt es sich beispielsweise um MOSFETs. Die Steuereinheiten sind beispielsweise als Batteriemodulmanagementsysteme ausgebildet.

Dokument US 2005/093512 A1 offenbart ein Batteriemodul für ein Kraftfahrzeug, umfassend mindestens eine Batteriezelle, einen negativen Pol, einen positiven Pol, einen Ladetransistor, der für einen Entladestrom leitend ist, einen Entladetransistor, der für einen Ladestrom leitend ist, und ein Managementsystem zum Steuern und Überwachen der mindestens einen Batteriezelle und der Transistoren, wobei die Transistoren elektrisch seriell zu der mindestens einen Batteriezelle geschaltet sind, und wobei ein Knotenpunkt zwischen den Transistoren mit einem Eingang des Managementsystems elektrisch verbunden ist, wobei der Ladetransistor elektrisch zwischen einen der Pole und den Knotenpunkt geschaltet ist, und wobei der Entladetransistor elektrisch zwischen die mindestens eine Batteriezelle und den Knotenpunkt geschaltet ist.

Nach der Herstellung werden die Lithium- lonen-Batteriezellen des Batteriemoduls in der Regel aufgeladen. Beim Einbau in ein Kraftfahrzeug, der gegebenenfalls erst nach einer verhältnismäßig langen Zeit stattfindet, sollte das Batteriemodul immer noch geladen sein. Während der Lagerdauer sollte also eine Entladung des Batteriemoduls, insbesondere eine Tiefentladung, durch welche die Lithium- lonen-Batteriezellen geschädigt werden können, vermieden werden. Daher soll während der Lagerdauer das Managementsystem ausgeschaltet bleiben und nur bei einer internen Fehlfunktion sowie beim Einbau des Batteriemoduls in ein Kraftfahrzeug aktiviert werden.

### Offenbarung der Erfindung

Es wird ein Batteriemodul für ein Kraftfahrzeug, insbesondere für ein Kraftfahrzeug mit Verbrennungsmotor, gemäß Anspruch 1 vorgeschlagen. Das Batteriemodul umfasst mindestens eine Batteriezelle, vorzugsweise mehrere Batteriezellen, die innerhalb des Batteriemoduls sowohl seriell als auch parallel miteinander verschaltetet sein können. Die Batteriezellen sind vorzugsweise als Lithium-Ionen-Batteriezellen ausgeführt.

Das Batteriemodul umfasst auch einen negativen Pol und einen positiven Pol. Beim Einbau in ein Kraftfahrzeug, also beim Anschluss an ein Bordnetz des Kraftfahrzeugs, werden die Pole des Batteriemoduls mit entsprechenden Anschlüssen des Kraftfahrzeugs elektrisch verbunden. Beim Betrieb des Batteriemoduls an dem Bordnetz des Kraftfahrzeugs liegt zwischen den Polen eine Nennspannung von beispielsweise 12 V oder 24 V an.

Das Batteriemodul umfasst ferner einen Ladetransistor, der für einen Entladestrom zum Entladen der mindestens einen Batteriezelle leitend ist. Wenn der Ladetransistor nicht aktiviert ist, so ist der Ladetransistor für einen Ladestrom zum Laden der mindestens einen Batteriezelle sperrend. Wenn der Ladetransistor durch entsprechende Ansteuerung aktiviert ist, so ist der Ladetransistor für einen Ladestrom und für einen Entladestrom leitend.

Das Batteriemodul umfasst ferner einen Entladetransistor, der für einen Ladestrom zum Laden der mindestens einen Batteriezelle leitend ist. Wenn der Entladetransistor nicht aktiviert ist, so ist der Entladetransistor für einen Entladestrom zum Entladen der mindestens einen Batteriezelle sperrend. Wenn der Entladetransistor durch entsprechende Ansteuerung aktiviert ist, so ist der Entladetransistor für einen Ladestrom und für einen Entladestrom leitend.

Das Batteriemodul umfasst auch ein Managementsystem zum Steuern und Überwachen der mindestens einen Batteriezelle und der Transistoren. Das Managementsystem weist beispielsweise eine Steuereinheit zur Ansteuerung der Transistoren und einen integrierten Schaltkreis zur Erfassung von Messwerten der Batteriezellen und der Transistoren auf.

Die beiden Transistoren sind elektrisch seriell zu der mindestens einen Batteriezelle geschaltet. Dabei ist ein Knotenpunkt zwischen den beiden Transistoren mit einem Versorgungseingang des Managementsystems elektrisch verbunden. Wenn an dem Knotenpunkt eine Versorgungsspannung anliegt, so fließt ein Versorgungsstrom zu dem Versorgungseingang und das Managementsystem ist eingeschaltet. Wenn an dem Knotenpunkt keine Versorgungsspannung anliegt, so fließt kein Versorgungsstrom zu dem Versorgungseingang und das Managementsystem ist ausgeschaltet.

Erfindungsgemäß ist der Ladetransistor elektrisch zwischen einen der Pole, beispielsweise den positiven Pol, und den Knotenpunkt geschaltet, und der Entladetransistor ist elektrisch zwischen die mindestens eine Batteriezelle und den Knotenpunkt geschaltet.

Nach der Herstellung des Batteriemoduls, wenn die mindestens eine Batteriezelle aufgeladen ist, sind die beiden Transistoren nicht aktiviert. Der Entladetransistor ist somit für einen Entladestrom sperrend. Somit kann kein Entladestrom von der mindestens einen Batteriezelle durch den Entladetransistor zu dem Knotenpunkt fließen. Somit kann keine Entladung der mindestens einen Batteriezelle stattfinden.

Insbesondere liegt an dem Knotenpunkt zwischen den beiden Transistoren keine Versorgungsspannung an, wenn der Entladetransistor nicht aktiviert ist, und keine externe Spannung an die Pole des Batteriemoduls angelegt wird. Somit fließt auch kein Versorgungsstrom von dem Knotenpunkt zu dem Versorgungseingang des Managementsystems. Das Managementsystem ist somit ausgeschaltet und verbraucht keine elektrische Energie aus der mindestens einen Batteriezelle.

Es ist auch denkbar, weitere Ladetransistoren und weitere Entladetransistoren vorzusehen. Dabei ist jeweils ein weiterer Ladetransistor zwischen denselben Pol und einen weiteren Knotenpunkt geschaltet, und jeweils ein weiterer Entladetransistor ist zwischen die mindestens eine Batteriezelle und den weiteren Knotenpunkt geschaltet. Der besagte weitere Knotenpunkt zwischen den weiteren Transistoren ist ebenfalls mit einem Versorgungseingang des Managementsystems elektrisch verbunden.

Gemäß einer vorteilhaften Ausgestaltung der Erfindung ist der Entladetransistor als MOSFET, also als Metalloxidhalbleiterfeldeffekttransistor, ausgeführt. Der Entladetransistor weist einen von dem Managementsystem ansteuerbaren Entladeschalter und eine Entladediode auf. Die Entladediode ist dabei elektrisch parallel zu dem Entladeschalter geschaltet. Dabei ist der Entladetransistor derart angeordnet, dass die Entladediode für einen Ladestrom leitend ist und einen Entladestrom sperrt. Die Entladediode ist dabei eine dem Entladetransistor zugehörige Body-Diode oder Inversdiode. Es ist aber auch denkbar, eine diskrete Entladediode parallel zu dem Entladetransistor zu schalten.

Gemäß einer vorteilhaften Ausgestaltung der Erfindung ist der Ladetransistor als MOSFET, also als Metalloxidhalbleiterfeldeffekttransistor, ausgeführt. Der Ladetransistor weist einen von dem Managementsystem ansteuerbaren Ladeschalter und eine Ladediode auf. Die Ladediode ist dabei elektrisch parallel zu dem Ladeschalter geschaltet. Dabei ist der Ladetransistor derart angeordnet, dass die Ladediode für einen Entladestrom leitend ist und einen Ladestrom sperrt. Die Ladediode ist dabei eine dem Ladetransistor zugehörige Body-Diode oder Inversdiode. Es ist aber auch denkbar, eine diskrete Ladediode parallel zu dem Ladetransistor zu schalten.

Gemäß einer vorteilhaften Weiterbildung der Erfindung ist eine erste Versorgungsdiode derart zwischen den Knotenpunkt und den Versorgungseingang des Managementsystems geschaltet, dass die erste Versorgungsdiode für einen Versorgungsstrom zur Versorgung des Managementsystems von dem Knotenpunkt zu dem Versorgungseingang leitend ist. Dabei ist die erste Versorgungsdiode für einen Strom in entgegengesetzte Richtung, also von dem Versorgungseingang zu dem Knotenpunkt zwischen den beiden Transistoren, sperrend.

Falls noch weitere Ladetransistoren und weitere Entladetransistoren vorgesehen sind, so können auch weitere Versorgungsdioden vorgesehen sein. Dabei ist eine weitere Versorgungsdiode derart zwischen einen weiteren Knotenpunkt und den Versorgungseingang des Managementsystems geschaltet, dass die weitere Versorgungsdiode für einen Versorgungsstrom zur Versorgung des Managementsystems von dem weiteren Knotenpunkt zu dem Versorgungseingang leitend ist. Für einen Strom in entgegengesetzte Richtung, also von dem Versorgungseingang zu dem weiteren Knotenpunkt zwischen den beiden weiteren Transistoren, ist die weitere Versorgungsdiode sperrend.

Gemäß einer weiteren vorteilhaften Weiterbildung der Erfindung ist eine zweite Versorgungsdiode derart zwischen einen der Pole und den Versorgungseingang des Managementsystems geschaltet, dass die zweite Versorgungsdiode für einen Versorgungsstrom zur Versorgung des Managementsystems von dem Pol zu dem Versorgungseingang leitend ist. Dabei ist die zweite Versorgungsdiode für einen Strom in entgegengesetzte Richtung, also von dem Versorgungseingang zu dem Pol, sperrend.

Die zweite Versorgungsdiode bewirkt, dass beim Anlegen einer externen Spannung an die Pole des Batteriemoduls ein Versorgungsstrom zur Versorgung des Managementsystems von dem Pol zu dem Versorgungseingang fließt. Beim Anlegen einer externen Spannung an die Pole des Batteriemoduls, beispielsweise beim Einbau des Batteriemoduls in ein Kraftfahrzeug, also beim Anschluss an ein Bordnetz des Kraftfahrzeugs, wird das Managementsystem somit eingeschaltet.

Gemäß einer vorteilhaften Ausgestaltung der Erfindung ist eine erste Klemmdiode elektrisch zwischen einen der Pole und einen Klemmpunkt geschaltet, und eine zweite Klemmdiode ist elektrisch zwischen die mindestens eine Batteriezelle und den Klemmpunkt geschaltet. Dabei sind die beiden Klemmdioden elektrisch antiseriell geschaltet. Die beiden Klemmdioden dienen dem Ladetransistor und dem Entladetransistor zum Schutz vor Überspannung. Alternativ zu den Klemmdioden könnten auch andere Schutzmaßnahmen implementiert werden. Auch könnten ein Ladetransistor sowie ein Entladetransistor verwendet werden, welche unempfindlicher gegen Überspannung sind.

Vorzugsweise ist dabei die erste Klemmdiode derart angeordnet, dass die erste Klemmdiode für einen Entladestrom leitend und für einen Ladestrom sperrend ist, und die zweite Klemmdiode ist derart angeordnet, dass die zweite Klemmdiode für einen Ladestrom leitend und für einen Entladestrom sperrend ist.

Gemäß einer vorteilhaften Weiterbildung der Erfindung ist der Klemmpunkt zwischen den beiden Klemmdioden mit dem Versorgungseingang des Managementsystems elektrisch verbunden. Wenn an dem Klemmpunkt eine Versorgungsspannung anliegt, so fließt ein Versorgungsstrom zu dem Versorgungseingang und das Managementsystem wird dadurch eingeschaltet.

Vorteilhaft ist eine dritte Versorgungsdiode derart zwischen den Klemmpunkt und den Versorgungseingang des Managementsystems geschaltet, dass die dritte Versorgungsdiode für einen Versorgungsstrom zur Versorgung des Managementsystems von dem Klemmpunkt zu dem Versorgungseingang leitend ist. Dabei ist die dritte Versorgungsdiode für einen Strom in entgegengesetzte Richtung, also von dem Versorgungseingang zu dem Klemmpunkt zwischen den beiden Klemmdioden, sperrend.

Ein erfindungsgemäßes Batteriemodul findet vorteilhaft Verwendung an einem Bordnetz eines Kraftfahrzeugs, insbesondere eines Kraftfahrzeugs mit einem Verbrennungsmotor. Aber auch andere Verwendungen, beispielsweise an Bordnetzen anderer Kraftfahrzeuge, wie beispielsweise Hybrid-Fahrzeugen oder Plug-In-Hybridfahrzeugen, die über ein Batteriemodul einen Verbrennungsmotor starten, sind denkbar.

### Vorteile der Erfindung

Nach der Herstellung des Batteriemoduls ist die mindestens eine Batteriezelle aufgeladen, und die beiden Transistoren sind nicht aktiviert. Das Managementsystem ist ausgeschaltet und verbraucht keine elektrische Energie aus der mindestens einen Batteriezelle. Somit kann auch während einer längeren Lagerdauer keine Entladung der mindestens einen Batteriezelle stattfinden. Das Batteriemodul kann also nach der Herstellung für eine längere Lagerdauer bei einem Zwischenhändler oder in einer Werkstatt eingelagert werden. Wenn das Batteriemodul zu einem späteren Zeitpunkt in ein Kraftfahrzeug eingebaut wird, insbesondere als Ersatz für eine defekte Blei-Säure-Batterie, so ist das Batteriemodul immer noch intakt und geladen. Zur Inbetriebnahme des Batteriemoduls an dem Bordnetz des Kraftfahrzeugs muss lediglich der Versorgungseingang des Managementsystems kurzzeitig mit einer Versorgungsspannung verbunden werden.

Wenn während der Lagerdauer des Batteriemoduls ein kritischer Fehler auftritt, insbesondere, wenn der Entladetransistor durchlegiert und somit einen elektrischen Kurzschluss darstellt, so fließt ein Versorgungsstrom von der mindestens einen Batteriezelle durch den Entladetransistor zu dem Knotenpunkt und zu dem Versorgungseingang des Managementsystems. Dadurch wird das Managementsystem eingeschaltet. Das Managementsystem kann nun mittels entsprechender Diagnosefunktionen den aufgetretenen Fehler ermitteln und darauf reagieren. Beispielsweise kann eine entsprechende Fehlermeldung generiert und in einem internen Speicher des Managementsystems abgelegt werden. Es kann auch eine kontrollierte Entladung der mindestens einen Batteriezelle durchgeführt werden, um das Batteriemodul in einen sicheren Zustand zu bringen. Es ist auch denkbar, über ein weiteres Trennelement den Ladestrom sowie den Entladestrom zu den Batteriezellen zu unterbrechen.

### Kurze Beschreibung der Zeichnungen

Ausführungsformen der Erfindung werden anhand der Zeichnung und der nachfolgenden Beschreibung näher erläutert.

Es zeigt:

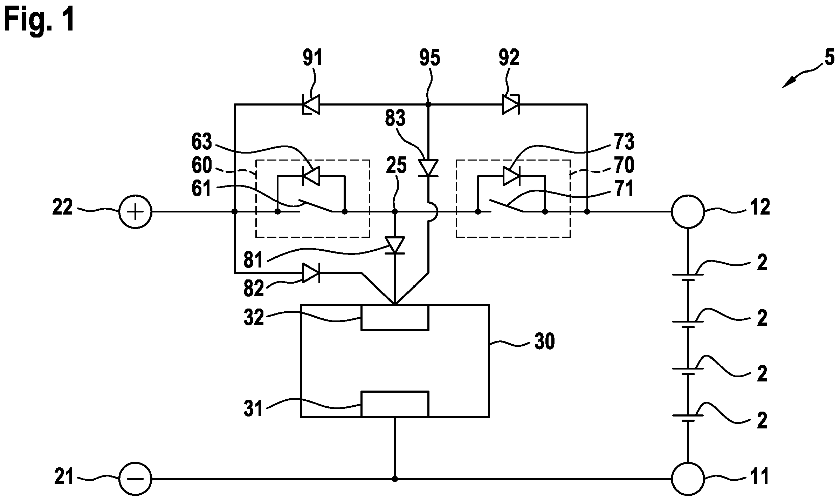

- Figur 1: eine schematische Darstellung eines Batteriemoduls.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figur stellt den Gegenstand der Erfindung nur schematisch dar.

Figur 1 zeigt eine schematische Darstellung eines Batteriemoduls 5. Das Batteriemodul 5 umfasst mehrere Batteriezellen 2, die seriell miteinander verschaltetet sind. Die Batteriezellen 2 sind vorliegend als Lithium- lonen-Batteriezellen ausgeführt. Die Batteriezellen 2 sind elektrischen zwischen einem positiven Terminal 12 und einem negativen Terminal 11 angeordnet. Eine von den Batteriezellen 2 gelieferte Spannung von beispielsweise 12 V oder 24 V liegt also zwischen dem positiven Terminal 12 und dem negativen Terminal 11 an. Das Batteriemodul 5 umfasst auch einen negativen Pol 21 und einen positiven Pol 22. Das negative Terminal 11 ist mit dem negativen Pol 21 elektrisch verbunden.

Das Batteriemodul 5 umfasst einen Ladetransistor 60 und einen Entladetransistor 70. Die beiden Transistoren 60, 70 sind elektrisch seriell zwischen die Batteriezellen 2 und den positiven Pol 22 geschaltet. Zwischen dem Ladetransistor 60 und dem Entladetransistor 70 ist ein Knotenpunkt 25 gebildet. Dabei ist der Ladetransistor 60 elektrisch zwischen den positiven Pol 22 und den Knotenpunkt 25 geschaltet, und der Entladetransistor 70 ist elektrisch zwischen die Batteriezellen 2 und den Knotenpunkt 25 geschaltet.

Wenn ein Ladestrom durch die beiden Transistoren 60, 70 fließt, so werden die Batteriezellen 2 geladen. Wenn ein Entladestrom durch die beiden Transistoren 60, 70 fließt, so werden die Batteriezellen 2 entladen.

Der Ladetransistor 60 als MOSFET ausgeführt. Der Ladetransistor 60 weist einen ansteuerbaren Ladeschalter 61 und eine Ladediode 63 auf. Die Ladediode 63 ist elektrisch parallel zu dem Ladeschalter 61 geschaltet. Der Ladetransistor 60 derart angeordnet, dass die Ladediode 63 für einen Entladestrom leitend ist und einen Ladestrom sperrt. Die Ladediode 63 ist dabei eine dem Ladetransistor 60 zugehörige Body-Diode oder Inversdiode. Wenn der Ladetransistor 60 durch entsprechende Ansteuerung aktiviert ist, so ist der Ladetransistor 60 für einen Ladestrom und für einen Entladestrom leitend. Wenn der Ladetransistor 60 nicht aktiviert ist, so ist der Ladetransistor 60 für einen Ladestrom sperrend, aber für einen Entladestrom leitend.

Der Entladetransistor 70 ist als MOSFET ausgeführt. Der Entladetransistor 70 weist einen ansteuerbaren Entladeschalter 71 und eine Entladediode 73 auf. Die Entladediode 73 ist elektrisch parallel zu dem Entladeschalter 71 geschaltet. Der Entladetransistor 70 derart angeordnet, dass die Entladediode 73 für einen Ladestrom leitend ist und einen Entladestrom sperrt. Die Entladediode 73 ist dabei eine dem Entladetransistor 70 zugehörige Body-Diode oder Inversdiode. Wenn der Entladetransistor 70 durch entsprechende Ansteuerung aktiviert ist, so ist der Entladetransistor 70 für einen Ladestrom und für einen Entladestrom leitend. Wenn der Entladetransistor 70 nicht aktiviert ist, so ist der Entladetransistor 70 für einen Entladestrom sperrend, aber für einen Ladestrom leitend.

Das Batteriemodul 5 umfasst auch ein Managementsystem 30 zum Steuern und Überwachen der Batteriezellen 2 und der Transistoren 60, 70. Das Managementsystem 30 weist dazu eine Steuereinheit zur Ansteuerung der Transistoren 60, 70 und einen integrierten Schaltkreis zur Erfassung von Messwerten der Batteriezellen 2 und der Transistoren 60, 70 auf. Ein Versorgungsausgang 31 des Managementsystems 30 ist mit dem negativen Terminal 11 und mit dem negativen Pol 21 elektrisch verbunden.

Das Batteriemodul 5 umfasst eine erste Versorgungsdiode 81, welche derart zwischen den Knotenpunkt 25 und einen Versorgungseingang 32 des Managementsystems 30 geschaltet ist, dass die erste Versorgungsdiode 81 für einen Versorgungsstrom von dem Knotenpunkt 25 zu dem Versorgungseingang 32 leitend ist. Der Knotenpunkt 25 ist somit über die erste Versorgungsdiode 81 mit dem Versorgungseingang 32 des Managementsystems 30 elektrisch verbunden.

Das Batteriemodul 5 umfasst eine zweite Versorgungsdiode 82, welche derart zwischen den positiven Pol 22 und den Versorgungseingang 32 des Managementsystems 30 geschaltet ist, dass die zweite Versorgungsdiode 82 für einen Versorgungsstrom von dem positiven Pol 22 zu dem Versorgungseingang 32 leitend ist. Der positive Pol 22 ist somit über die zweite Versorgungsdiode 82 mit dem Versorgungseingang 32 des Managementsystems 30 elektrisch verbunden.

Das Batteriemodul 5 umfasst eine erste Klemmdiode 91, die elektrisch zwischen den positiven Pol 22 und einen Klemmpunkt 95 geschaltet ist, und eine zweite Klemmdiode 92, die elektrisch zwischen die Batteriezellen 2 und den Klemmpunkt 95 geschaltet ist. Die erste Klemmdiode 91 ist derart angeordnet, dass die erste Klemmdiode 91 für einen Entladestrom leitend und für einen Ladestrom sperrend ist. Die zweite Klemmdiode 92 ist derart angeordnet, dass die zweite Klemmdiode 92 für einen Ladestrom leitend und für einen Entladestrom sperrend ist. Die beiden Klemmdioden 91, 92 sind somit elektrisch antiseriell geschaltet.

Das Batteriemodul 5 umfasst eine dritte Versorgungsdiode 83, welche derart zwischen den Klemmpunkt 95 und den Versorgungseingang 32 des Managementsystems 30 geschaltet ist, dass die dritte Versorgungsdiode 83 für einen Versorgungsstrom von dem Klemmpunkt 95 zu dem Versorgungseingang 32 leitend ist. Der Klemmpunkt 95 ist somit über die dritte Versorgungsdiode 83 mit dem Versorgungseingang 32 des Managementsystems 30 elektrisch verbunden.

Die Erfindung ist nicht auf die hier beschriebenen Ausführungsbeispiele und die darin hervorgehobenen Aspekte beschränkt.

## Patentansprüche

1. Batteriemodul (5) für ein Kraftfahrzeug, umfassend
mindestens eine Batteriezelle (2),
einen negativen Pol (21), einen positiven Pol (22),
einen Ladetransistor (60), der für einen Entladestrom leitend ist, einen Entladetransistor (70), der für einen Ladestrom leitend ist, und ein Managementsystem (30) zum Steuern und Überwachen der mindestens einen Batteriezelle (2) und der Transistoren (60, 70), wobei die Transistoren (60, 70) elektrisch seriell zu der mindestens einen Batteriezelle (2) geschaltet sind, und wobei
ein Knotenpunkt (25) zwischen den Transistoren (60, 70) mit einem Versorgungseingang (32) des Managementsystems (30) elektrisch verbunden ist,
wobei der Ladetransistor (60) elektrisch zwischen einen der Pole (21, 22) und den Knotenpunkt (25) geschaltet ist, und wobei der Entladetransistor (70) elektrisch zwischen die mindestens eine Batteriezelle (2) und den Knotenpunkt (25) geschaltet ist.

2. Batteriemodul (5) nach Anspruch 1, **dadurch gekennzeichnet, dass**
der Entladetransistor (70) als MOSFET ausgeführt ist, welcher einen von dem Managementsystem (30) ansteuerbaren Entladeschalter (71) und
eine Entladediode (73) aufweist, die elektrisch parallel zu dem Entladeschalter (71) geschaltet ist, wobei
der Entladetransistor (70) derart angeordnet ist, dass die Entladediode (73) für einen Ladestrom leitend ist und einen Entladestrom sperrt.

3. Batteriemodul (5) nach einem der vorstehenden Ansprüche, **dadurch gekennzeichnet, dass**
der Ladetransistor (60) als MOSFET ausgeführt ist, welcher einen von dem Managementsystem (30) ansteuerbaren Ladeschalter (61) und eine Ladediode (63) aufweist, die elektrisch parallel zu dem Ladeschalter (61) geschaltet ist, wobei
der Ladetransistor (60) derart angeordnet ist, dass die Ladediode (63) für einen Entladestrom leitend ist und einen Ladestrom sperrt.

4. Batteriemodul (5) nach einem der vorstehenden Ansprüche, **dadurch gekennzeichnet, dass**
eine erste Versorgungsdiode (81) derart zwischen den Knotenpunkt (25) und den Versorgungseingang (32) des Managementsystems (30) geschaltet ist, dass
die erste Versorgungsdiode (81) für einen Versorgungsstrom zur Versorgung des Managementsystems (30) von dem Knotenpunkt (25) zu dem Versorgungseingang (32) leitend ist.

5. Batteriemodul (5) nach einem der vorstehenden Ansprüche, **dadurch gekennzeichnet, dass**
eine zweite Versorgungsdiode (82) derart zwischen einen der Pole (21, 22) und den Versorgungseingang (32) des Managementsystems (30) geschaltet ist, dass
die zweite Versorgungsdiode (82) für einen Versorgungsstrom zur Versorgung des Managementsystems (30) von dem Pol (21, 22) zu dem Versorgungseingang (32) leitend ist.

6. Batteriemodul (5) nach einem der vorstehenden Ansprüche, **dadurch gekennzeichnet, dass**
eine erste Klemmdiode (91) elektrisch zwischen einen der Pole (21, 22) und einen Klemmpunkt (95) geschaltet ist, und dass
eine zweite Klemmdiode (92) elektrisch zwischen die mindestens eine Batteriezelle (2) und den Klemmpunkt (95) geschaltet ist, wobei die Klemmdioden (91, 92) elektrisch antiseriell geschaltet sind.

7. Batteriemodul (5) nach Anspruch 6, **dadurch gekennzeichnet, dass**
die erste Klemmdiode (91) derart angeordnet ist, dass
die erste Klemmdiode (91) für einen Entladestrom leitend ist, und dass
die zweite Klemmdiode (92) derart angeordnet ist, dass
die zweite Klemmdiode (92) für einen Ladestrom leitend ist.

8. Batteriemodul (5) nach einem der Ansprüche 6 bis 7, **dadurch gekennzeichnet, dass**
der Klemmpunkt (95) zwischen den Klemmdioden (91, 92) mit dem Versorgungseingang (32) des Managementsystems (30) elektrisch verbunden ist.

9. Batteriemodul (5) nach Anspruch 8, **dadurch gekennzeichnet, dass**
eine dritte Versorgungsdiode (83) derart zwischen den Klemmpunkt (95) und den Versorgungseingang (32) des Managementsystems (30) geschaltet ist, dass
die dritte Versorgungsdiode (83) für einen Versorgungsstrom zur Versorgung des Managementsystems (30) von dem Klemmpunkt (95) zu dem Versorgungseingang (32) leitend ist.

10. Verwendung eines Batteriemoduls (5) nach einem der vorstehenden Ansprüche an einem Bordnetz (50) eines Kraftfahrzeugs, insbesondere eines Kraftfahrzeugs mit Verbrennungsmotor.

## Claims

1. Battery module (5) for a motor vehicle, comprising at least one battery cell (2),
a negative pole (21), a positive pole (22),
a charging transistor (60) that conducts a discharging current,
a discharging transistor (70) that conducts a charging current, and
a management system (30) for controlling and monitoring the at least one battery cell (2) and the transistors (60, 70), wherein the transistors (60, 70) are electrically connected in series with the at least one battery cell (2), and wherein
a node (25) between the transistors (60, 70) is electrically connected to a supply input (32) of the management system (30), wherein
the charging transistor (60) is electrically connected between one of the poles (21, 22) and the node (25), and wherein
the discharging transistor (70) is electrically connected between the at least one battery cell (2) and the node (25) .

2. Battery module (5) according to Claim 1, **characterized in that** the discharging transistor (70) is in the form of a MOSFET that has a discharging switch (71), which can be actuated by the management system (30), and a discharging diode (73), which is electrically connected in parallel with the discharging switch (71), wherein the discharging transistor (70) is arranged in such a way that the discharging diode (73) conducts a charging current and blocks a discharging current.

3. Battery module (5) according to either of the preceding claims, **characterized in that**
the charging transistor (60) is in the form of a MOSFET that has a charging switch (61), which can be actuated by the management system (30), and a charging diode (63), which is electrically connected in parallel with the charging switch (61), wherein
the charging transistor (60) is arranged in such a way that the charging diode (63) conducts a discharging current and blocks a charging current.

4. Battery module (5) according to one of the preceding claims, **characterized in that**
a first supply diode (81) is connected between the node (25) and the supply input (32) of the management system (30) in such a way that
the first supply diode (81) conducts a supply current for supplying the management system (30) from the node (25) to the supply input (32).

5. Battery module (5) according to one of the preceding claims, **characterized in that**
a second supply diode (82) is connected between one of the poles (21, 22) and the supply input (32) of the management system (30) in such a way that
the second supply diode (82) conducts a supply current for supplying the management system (30) from the pole (21, 22) to the supply input (32).

6. Battery module (5) according to one of the preceding claims, **characterized in that**
a first clamping diode (91) is electrically connected between one of the poles (21, 22) and a clamping point (95), and **in that**
a second clamping diode (92) is electrically connected between the at least one battery cell (2) and the clamping point (95), wherein the clamping diodes (91, 92) are electrically connected in antiseries.

7. Battery module (5) according to Claim 6, **characterized in that**
the first clamping diode (91) is arranged in such a way that the first clamping diode (91) conducts a discharging current, and **in that**
the second clamping diode (92) is arranged in such a way that the second clamping diode (92) conducts a charging current.

8. Battery module (5) according to either of Claims 6 and 7, **characterized in that**
the clamping point (95) between the clamping diodes (91, 92) is electrically connected to the supply input (32) of the management system (30).

9. Battery module (5) according to Claim 8, **characterized in that**
a third supply diode (83) is connected between the clamping point (95) and the supply input (32) of the management system (30) in such a way that
the third supply diode (83) conducts a supply current for supplying the management system (30) from the clamping point (95) to the supply input (32).

10. Use of a battery module (5), according to one of the preceding claims, on an on-board electrical system (50) of a motor vehicle, in particular a motor vehicle with an internal combustion engine.

## Revendications

1. Module de batterie (5) pour un véhicule automobile, comprenant
au moins un élément de batterie (2),
un pôle négatif (21), un pôle positif (22),
un transistor de charge (60) conduisant un courant de décharge,
un transistor de décharge (70) conduisant un courant de charge, et
un système de gestion (30) pour commander et surveiller ledit au moins un élément de batterie (2) et les transistors (60, 70), les transistors (60, 70) étant connectés électriquement en série avec ledit au moins un élément de batterie (2), et dans lequel
un nœud (25) entre les transistors (60, 70) est relié électriquement à une entrée d'alimentation (32) du système de gestion (30), dans lequel
le transistor de charge (60) est connecté électriquement entre l'un des pôles (21, 22) et le nœud (25), et dans lequel
le transistor de décharge (70) est connecté électriquement entre ledit au moins un élément de batterie (2) et le nœud (25).

2. Module de batterie (5) selon la revendication 1, **caractérisé en ce que** le transistor de décharge (70) est réalisé sous forme de MOSFET qui présente un commutateur de décharge (71) pouvant être piloté par le système de gestion (30) et une diode de décharge (73) qui est connectée électriquement en parallèle au commutateur de décharge (71), dans lequel
le transistor de décharge (70) est disposé de telle sorte que la diode de décharge (73) conduit un courant de charge et bloque un courant de décharge.

3. Module de batterie (5) selon l'une quelconque des revendications précédentes, **caractérisé en ce que**
le transistor de charge (60) est réalisé sous la forme d'un MOSFET qui présente un commutateur de charge (61) pouvant être piloté par le système de gestion (30) et une diode de charge (63) qui est connectée électriquement en parallèle au commutateur de charge (61), dans lequel
le transistor de charge (60) est disposé de telle sorte que la diode de charge (63) conduit un courant de décharge et bloque un courant de charge.

4. Module de batterie (5) selon l'une quelconque des revendications précédentes, **caractérisé en ce que**
une première diode d'alimentation (81) est connectée entre le nœud (25) et l'entrée d'alimentation (32) du système de gestion (30) de telle sorte que
la première diode d'alimentation (81) conduit un courant d'alimentation pour alimenter le système de gestion (30) du nœud (25) à l'entrée d'alimentation (32) .

5. Module de batterie (5) selon l'une quelconque des revendications précédentes, **caractérisé en ce que**
une deuxième diode d'alimentation (82) est connectée entre l'un des pôles (21, 22) et l'entrée d'alimentation (32) du système de gestion (30) de telle sorte que
la deuxième diode d'alimentation (82) conduit un courant d'alimentation pour alimenter le système de gestion (30) du pôle (21, 22) à l'entrée d'alimentation (32) .

6. Module de batterie (5) selon l'une quelconque des revendications précédentes, **caractérisé en ce que**
une première diode de limitation (91) est connectée électriquement entre l'un des pôles (21, 22) et un point de limitation (95), et **en ce que**
une deuxième diode de limitation (92) est connectée électriquement entre ledit au moins un élément de batterie (2) et le point de limitation (95), les diodes de limitation (91, 92) étant connectées électriquement en anti-série.

7. Module de batterie (5) selon la revendication 6, **caractérisé en ce que** la première diode de limitation (91) est disposée de telle sorte que la première diode de limitation (91) conduit un courant de décharge, et **en ce que** la deuxième diode de limitation (92) est disposée de telle sorte que la deuxième diode de limitation (92) conduit un courant de charge.

8. Module de batterie (5) selon l'une quelconque des revendications 6 à 7, **caractérisé en ce que** le point de limitation (95) entre les diodes de limitation (91, 92) est relié électriquement à l'entrée d'alimentation (32) du système de gestion (30).

9. Module de batterie (5) selon la revendication 8, **caractérisé en ce que**
une troisième diode d'alimentation (83) est connectée entre le point de limitation (95) et l'entrée d'alimentation (32) du système de gestion (30) de telle sorte que
la troisième diode d'alimentation (83) conduit un courant d'alimentation pour alimenter le système de gestion (30) du point de limitation (95) à l'entrée d'alimentation (32).

10. Utilisation d'un module de batterie (5) selon l'une quelconque des revendications précédentes sur un réseau de bord (50) d'un véhicule automobile, en particulier d'un véhicule automobile à moteur à combustion interne.
